# EUROPEAN PATENT APPLICATION

(11) **EP 1 710 071 A1**
(43) Date of publication of application: **11.10.2006**
(21) Application number: 05102803.3
(22) Date of filing: 08.04.2005
(51) Int. Cl.: B29C 45/56, B29C 45/38, B29L 17/00

(54) **An injection moulding device as well as a method for moulding disc shaped objects**

(71) Applicant: M2 Engineering AB (publ), SE-163 91 Spanga (SE)
(72) Inventor: Näppi, Jarmo, 172 62, SUNDBYBERG (SE)
(74) Representative: Mattsson, Niklas

(57) **Abstract**

The invention relates to an injection moulding device for moulding disc shaped objects having a through hole. The injection moulding device comprises two mould parts (1, 2) of which one (1) is fixed and has an injection nozzle (6) for injecting a warm, liquid resin, whereas the other mould part (2) being movable toward and away from the fixed mould part. The movable mould part having a punch (3), which is movable towards the fixed mould part to punch out the hole through the disc. The fixed mould part is provided with an insert (4) surrounding the nozzle and having essentially the same cross sectional shape and dimension as and being in alignment with the punch, the insert being movable into the fixed mould part, by the action of the punch and against the action of a resilient counter force acting on the insert. The invention also relates to a method for injection moulding of disc shaped objects.

## Description

The present invention relates to an injection moulding device for moulding disc shaped objects, typically information carriers such as CD- and DVD-discs, having a through hole.

The invention also relates to a method for moulding such disc shaped objects.

### Background of the invention

When moulding disc shaped objects, of the kind mentioned above, it is known in the state of the art, to use a mould comprising two mould parts, namely one fixed mould part having an injection nozzle for injecting the liquid moulding compound, typically a warm resin, into an object cavity for forming of the disc, and a movable mould part having a punch which is movable from a retracted position, substantially flush with or somewhat protruding beyond the surface of the movable mould part, to a projected position where it projects a distance beyond the surface area. The object cavity for forming of the disc shaped object, may be arranged in either one of the mould parts. The injection nozzle orifice is positioned in the area of the hole to be formed in the centre, in order to avoid risers or sprues in the finished product since the material in the centre are to be removed anyway. Around the nozzle orifice, the fixed mould part is provided with a recess, being in alignment with and having essentially the same shape and dimension as the punch, for accommodating an end portion of the punch in the projected state.

Thus, when forming of a disc, the warm resin is injected into the object cavity when the two mould parts are closed or nearly closed. As soon as an adequate amount of resin has been injected, the punch is advanced with or without a delay from the retracted position in the movable mould part, into the recess in the fixed mould part and, accordingly, the hole in the disc is formed while the resin is still molten. The mould parts including the punch and the recess around the injection nozzle is cooled, preferably by cooling water flowing in cooling ducts in the respective parts, such that shortly after projecting the punch, the resin in the object cavity and the recess will freeze or solidify. Subsequently the mould can be opened by spacing the mould parts apart for removing the finished disc from the mould.

By doing this also the punch is removed from the recess and will then retract the sprue, i.e. the redundant resin from the hole area and also a solidified "shaft" from the sprue bush all the way to an extruder, which is feeding the injection nozzle with warm resin. The extruder is not cooled and hence the resin in the extruder is always kept flowing. The extraction of the sprue is made possible by means of a cavity formed in the end face of the punch, which is tapered towards the end face such that the sprue will be securely hold by the punch when the resin has been solidified. Accordingly, when the punch is retracted, the sprue including the solidified "shaft" in the sprue bush is withdrawn. Subsequently, the finished disc as well as the sprue may each be removed from the mould by means of a special unloading device, respectively, wherein the extraction of the sprue from the punch is facilitated by an expeller in the punch which pushes the sprue out from engagement with the tapered cavity in the punch.

The injection moulding device described above has several disadvantages. Among other things the device represents a complicated structure, which e.g. necessitates the provision of a separate expeller and an unloading device for the sprue. Since each forming of a disc also produces an amount of redundant resin in form of a sprue, which is disposed of, the material consumption due to the waste will be comparatively high. Moreover, since the procedure involves removal of a solidified sprue, which in the boundary to the extruder gradually changes into a liquid state, there is always the risk that liquid resin is drawn out from the injection nozzle in form of thin threads which will be solidified and can get caught in the mould, when the sprue is removed from the nozzle, if the cooling time between each moulding cycle has been to short. On the contrary it is also a risk that there will be formed a plug of solidified resin in the extruder if the cooling time between each moulding cycle has been to long. Such threads or plugs of solidified resin may damage the subsequent disc and e.g. render an optical disc illegible. Thus, it is very critical to adapt the cycle time to the prevailing conditions such as material characteristics, cooling rate and the like. Particularly, it is very difficult to decrease the cycle time, which always is a desired option in the manufacturing industry. Naturally, all of these afore-mentioned disadvantages increases the manufacturing costs for the discs.

An injection moulding device of the afore mentioned kind, is disclosed in WO 03/020491. However, here also provisions is made for allowing a small volume of resin to flow back into a so called prechamber in the extruder when the punch is advanced for forming the centre hole. By this the material waste of the redundant resin in the sprue, is somewhat reduced, however not eliminated, but all the disadvantages mentioned above, still remain. However, a flow back of resin into the extruder, may in itself be a disadvantage, since, on the one hand, it might then be more difficult to control the amount of resin injected in each forming cycle and, on the other hand, the resin forced back into the extruder might already have been somewhat cooled down during the time outside the extruder when surrounded by cooled mould surfaces. The cooling down increases its viscosity, which might cause problems during the next forming cycle when an amount of resin, of which different volume parts are having different viscosity, is injected into the object cavity, resulting in deteriorated flowing characteristics and possible defects in the disc, such as so called flow marks, cold marks and so on.

In US 5 690 974 is disclosed an injection moulding device in which the formation of a sprue is avoided. This is accomplished by having the nozzle arranged somewhat protruding from the bottom of the recess for receiving the punch. In this way the space from the bottom of the recess to the level of the nozzle tip, will be filled with resin which, after the first moulding cycle, will be solidified and remain in the recess during the rest of the manufacturing series. This residual solidified resin, will act as a thermal insulation, preventing the resin in the subsequent moulding cycles to solidify in the recess. However, as soon as the circumferential edge of the punch passes the circumferential edge of the recess, the liquid resin between the punch and nozzle is trapped. Therefore provisions must be made for this resin to be able to flow back into the nozzle, which leads to the same disadvantages as set forth above. Moreover, the nozzle is heated by a heater surrounding the nozzle, most likely to try to avoid the problems caused by having cooled resin flowing back into the nozzle. However, the tip of the nozzle is not heated, probably due to lack of space, so those problems will presumably remain.

### Summary of the invention

It is an object of the present invention to provide an improved injection moulding device, by means of which it is possible to produce disc shaped objects to a lower cost than with prior art devices. At least this object is achieved with a device according to claim 1.

The invention also relates to a method having essentially the same object as above. At least this object is achieved by a method according to claim 6.

The basis of the invention is the insight that the above mentioned object may be achieved by an injection moulding device in which a fixed mould part is provided with an insert surrounding a nozzle and being movable together with the nozzle from an initial position, in which an end face of the insert is positioned in the vicinity of a surface of the fixed mould part, into a depressed position in the fixed mould part against the action of a resilient counter force, for defining a recess in the fixed mould part. A movable mould part of the injection moulding device, on the other hand, is provided with a punch which is movable from an initial, retracted position in the movable mould part, to a projected position beyond a surface of the fixed mould part, wherein the punch is aligned with and having essentially the same cross sectional shape and dimension as the insert. The insert is movable arranged into the fixed mould part, by action of the punch and against the action of a resilient counter force acting on the insert, to define a recess into which the punch may penetrate during forming of the disc.

The expression "being aligned with and having essentially the same cross sectional shape and dimension" as used herein for the relation between the punch and the insert, means that the punch may be introduced with a snug fit into the recess occupied by the insert. Likewise the insert is mating with a snug fit in the recess.

With a device according to the invention, no sprue of redundant resin is formed during forming of the discs, with the exception of when forming the first disc in each manufacturing series. Then a thin layer of solidified resin will be formed between the punch and the insert due to the fact that all of the molten resin is not managed to be pressed out into the mould cavity before it is solidified by the cooling influence from the mould surfaces, primarily the punch. This solidified layer of resin, will after that remain adhered to the insert and function as an insulating layer preventing any further building-up of solidified resin, such that when forming of the subsequent discs, after the first disc, all of the injected resin will be managed to be pressed out into the mould cavity.

The pressing of the resin between the punch and the insert, is accomplished by the punch being actively operable by means of for example a motor or a pneumatic or hydraulic actuator, whereas the insert is passively or actively resilient by means of for example a spring or a motor. In a preferred embodiment both the punch and the extruder nozzle that pushes the insert are motor operated, wherein the motor force acting on the punch is preferably 4 to 6 or about 5 times larger than the motor force acting on the insert. In this way the resin between the punch and the insert is first squeezed or pressed with a comparatively large force, preferably 5 to 7 kN or about 6 kN. Due to this pressing force, the resin between punch and insert starts to flow out into the mould cavity before the insert, together with the punch, starts to move inwards into the recess in the fixed mould part. As soon as the circumferential edge around the end face of the insert has reached the circumferential edge around the recess in the movable mould part, the passage available for the resin to flow out into the mould cavity, is restrained to the gap between the edge of the punch end face and the edge of the recess in the fixed mould part. At the time the edge of the punch reaches the edge of the recess, this passage will be closed.

In a preferred embodiment of the invention, the fixed as well as the movable mould part is cooled, preferably by cooling ducts for a cooling medium, preferably water. Moreover, the punch is separately cooled by means of cooling ducts arranged in the punch. However, in the preferred embodiment, the insert lacks any cooling capability and, furthermore, the nozzle is around the circumference insulated from the insert through a thin air gap between the nozzle and the insert, such that the risk of getting flow marks or cold marks, due to improper cooling down of the resin in the nozzle, is eliminated. However, this insulating effect could also be accomplished by a lining of any appropriate material. Also, there is no risk that the resin over the nozzle aperture will solidify and form a solidified plug, but the resin in the nozzle will always remain in a liquid state.

Furthermore, in a preferred embodiment, the end face of at least the insert, but preferably also the punch, in their respective initial positions, is protruding a small distance, preferably one or a few tenths of a millimetre, beyond the planes of the mould faces of the movable and the fixed mould part, respectively. This is done to ensure and facilitate proper outflow of molten resin into the object cavity, when pressing the punch towards the insert. However, the end faces of each of the punch and the insert could also, in their initial positions, be flush with the planes of the mould faces and in fact also somewhat depressed below the mould faces. The latter for the insert, is possible if the distance of depression corresponds to the thickness of the solidified resin layer, which is left adhered to the insert between each moulding cycle.

In a hereafter described preferred embodiment of the invention, the object cavity for forming of the discs is provided in the fixed mould part. In such a case, a stamper or die (not shown in the drawings), for forming of optically illegible patterns on the disc, is as a rule applied on the opposite movable mould part since the stamper need space for movements caused by varying temperatures. However, it is to be understood that also the reversed condition could be possible, i.e. the object cavity provided in the movable mould part and the stamper applied to the fixed mould part.

Although the main object of the invention is to enable manufacturing of disc shaped objects to a lower cost than with prior art devices, it appears from the aforesaid that this object may be achieved in different ways. For example by allowing for manufacturing of more disc shaped objects per time unit or by enhancing the quality of the manufacturing process, leading to a decreased rejecting of defective discs.

### Short description of the drawings

Hereinafter, a preferred embodiment of the invention will be described with reference to the appended drawings in which an exemplary embodiment is disclosed, and in which:

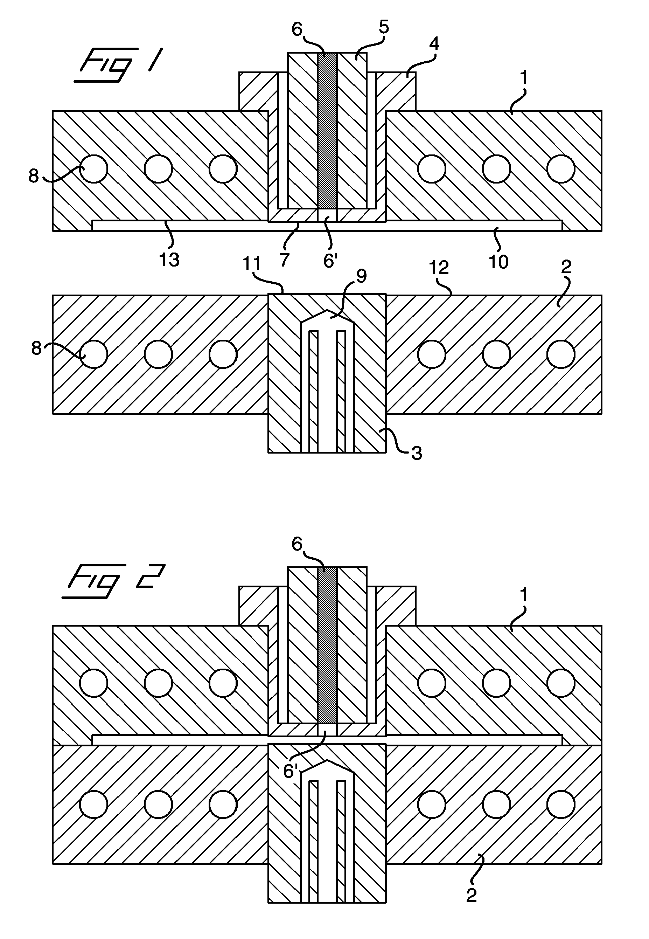

- Figs 1-8: show schematic cross sections through an injection moulding device, comprising a fixed mould part and a movable mould part, in different stages of a manufacturing cycle.

### Detailed description of a preferred embodiment of the invention

In the exemplary embodiment, a device for moulding of a circular optical disc, such as a CD- or DVD-disc, having a centric, circular through hole, will be described.

Throughout the various figures, reference number 1 denotes a fixed mould part and 2 a movable mould part. The movable mould part 2 is movable towards and away from the fixed mould part and includes a movable punch 3. The fixed mould part 1, on the other hand, includes an insert 4 with a nozzle tube 5 having a nozzle passage 6, opening through an end face 7 of the insert via an insert passage 6'. The figures also showing cooling ducts 8, for circulating of a cooling medium, such as water, through the fixed as well as the movable mould part. Also the punch 3 is provided with a cooling duct 9 having a an inner inlet tube for feeding the cooling medium into the punch, and an outer, concentric outlet bore for discharging the cooling medium from the punch.

An object cavity 10 for moulding of the discs is, in this embodiment, arranged in the fixed mould part 1, but could also be arranged in the movable mould part. The movable mould part 2 may be provided with a so called stamper, however not shown in the drawings, for forming of an optically illegible pattern or information into the disc surface.

In an initial position, as shown for instance in fig 1, the punch 3 is drawn into the movable mould part 2, such that an end face 11 of the punch projects a small distance, preferably one or a few tenths of a millimetre, beyond a mould surface 12 (or a stamper surface). In a corresponding fashion, the insert is positioned in the fixed mould part 1, such that the end face 7 of the insert, projects a small distance, preferably one or a few tenths of a millimetre, beyond a mould surface 13 of the fixed mould part 1.

Fig 1 is intended to illustrate a situation when a new manufacturing series of discs is about to begin, and therefore no resin is yet present in the object cavity 10 or the insert passage 6', whereas the nozzle passage 6 is filled with resin. Furthermore, the movable mould part is spaced from the fixed mould part.

When starting a moulding cycle, the movable mould part 2 is first moved towards the fixed mould part 1, as is illustrated in fig 2, either into close contact with the fixed mould part or, as is preferred, into a position immediately adjacent to the fixed mould part. The reason for the latter, is to enable discharge of air from the mould cavity through a narrow passage defined between the two mould parts, during injection of an amount of resin through the nozzle passage 6.

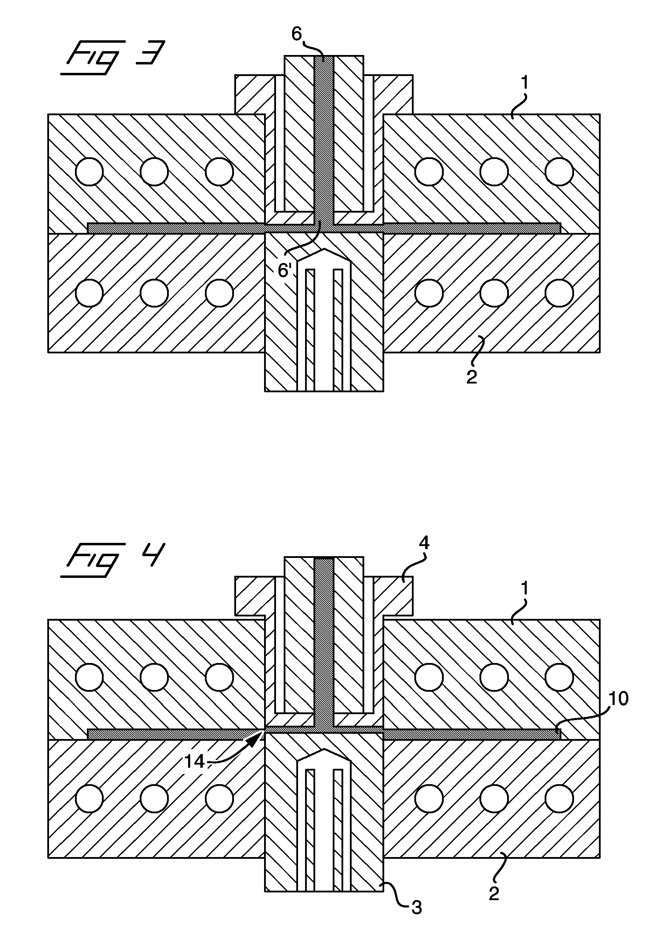

In this stage, liquid resin is injected through the nozzle and insert passages 6, 6', into the space between the punch and the insert and into the object cavity, as is shown in fig 3. If not already done, the movable mould part 2 is now firmly moved against the fixed mould part 1 to compress the resin in the cavity and the disc will adopt the proper shape and the pattern on the stamper, if any, will be transferred to the disc.

With the resin still in a liquid state, the punch 3 is pushed out from the movable mould part 2 towards the insert 4, such that the resin located between the punch and the insert will be compressed and forced out into the object cavity 10. When the pressing force from the punch exceeds a counter force acting on the insert, the punch together with the insert will start to move into the fixed mould part 1. This is illustrated in fig 4 where the insert 4 has moved a small distance into the fixed mould part such that a recess is formed in it. Resin from the area between the punch and the insert, may still be forced out into the object cavity as long as a gap 14 between a circumferential edge of the recess and a circumferential edge of the punch is open. As soon as the circumferential edge of the punch reaches the circumferential edge around the recess, the gap 14 will be closed and, consequently, the hole through the disc will be completed. It is preferred to accomplish this while essentially all of the resin is still in a liquid state, so the pressing rate as well as the cooling effect is controlled to achieve this object.

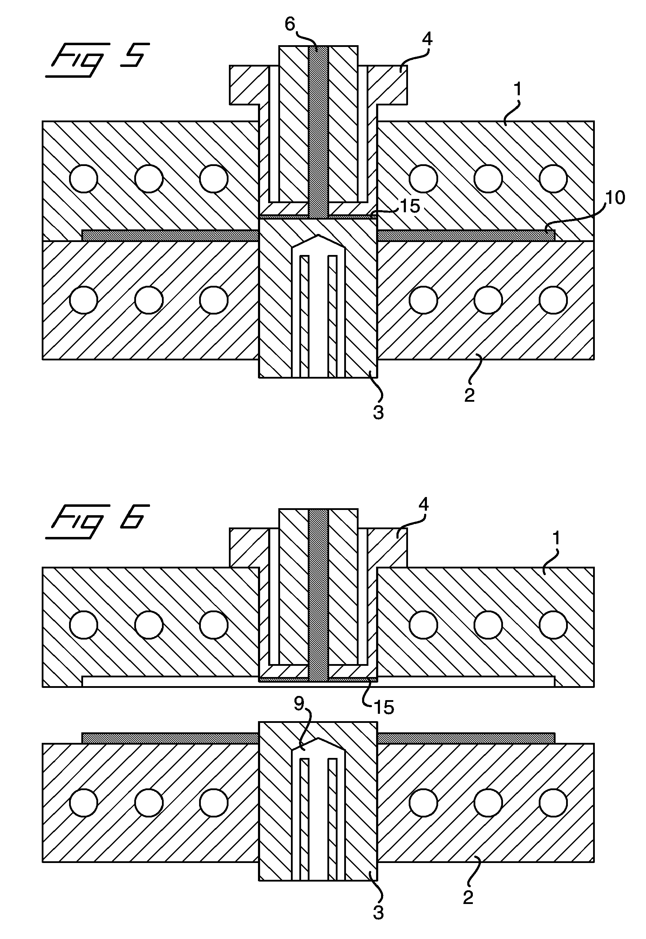

In fig 5, the punch 3 and the insert 4 have reached their end positions in the fixed mould part 1 and the resin in the mould cavity 10 has been solidified. As apparent from the figure, there is still a thin layer of resin 15 between the punch and the insert, which also has been solidified, primarily by the cooling effect from the punch.

Now the movable mould part 2 may be spaced from the fixed mould part 1, as is illustrated in fig 6. When doing so, also the insert 4 will be moved back to its initial position by action of the resilient force acting on it. The solidified resin layer 15 will remain attached to the end face of the insert 4. This is due to the fact that the punch 3 is cooled through the cooling duct 9 and hence the resin layer will easily be released from the punch, whereas the resin layer will adhere to the end face of the insert 4 since it is not cooled.

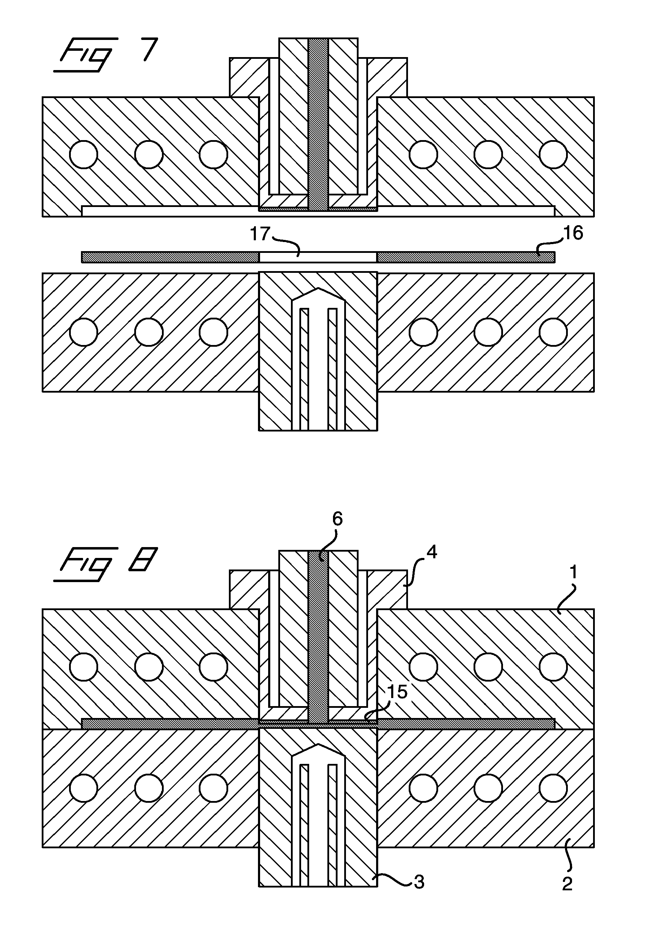

After or at the same time as withdrawing of the punch 3 back to its initial position in the movable mould part 2, the disc 16, being formed with a through hole 17, may be removed from the mould by means of any unloading device known in the art. This is illustrated in fig 7. However, the resin layer 15 is not removed from the insert 4, but will remain during moulding of subsequent discs and, in fact, during the whole manufacturing series in progress. This is illustrated in fig 8, in which the next moulding cycle has started, by first closing the movable mould part 2 towards the fixed mould part 1, and subsequently injecting liquid resin into the object cavity 10 through the nozzle passage 6. As is apparent, the solidified resin layer 15 still remains and decreases the available volume for the liquid resin in the area between the punch 3 and the insert 4. Tests performed in practice, has revealed that the resin layer 15 will act as an insulating layer preventing solidifying of any further resin. Consequently, the resin layer 15 will not build up any further during this moulding cycle or subsequent moulding cycles during the manufacturing series. Instead all of the molten resin, injected through the injection nozzle, will be forced out from the area between the punch and the insert and into the object cavity, during moulding of the second and subsequent discs in each manufacturing series.

## Claims

1. An injection moulding device for moulding disc shaped objects (16) having a through hole (17), the injection moulding device comprising two mould parts (1, 2), one of which (1) is fixed and having an injection nozzle (6) for injecting a warm, liquid resin, and the other mould part (2) being movable toward and away from the fixed mould part, the fixed or the movable mould part having an object cavity (10) for forming of the disc by receiving an injection of resin from the injection nozzle, the movable mould part having a punch (3), which is movable towards the fixed mould part to punch out the hole through the disc while the resin is still molten, wherein the fixed mould part is provided with an insert (4) surrounding the nozzle and having essentially the same cross sectional shape and dimension as and being in alignment with the punch, the insert being movable into the fixed mould part, by the action of the punch and against the action of a resilient counter force acting on the insert, to define a recess into which the punch may penetrate during forming of the disc.

2. An injection moulding device according to claim 1, wherein the fixed and the movable mould part (1, 2) as well as the punch (3), are cooled whereas the insert (4) is not cooled.

3. An injection moulding device according to claim 1 or 2, wherein the object cavity (10) is circular.

4. An injection moulding device according to any of the preceding claims, wherein the punch (3) and the insert (4) being circular in cross section and being centric positioned in relation to the object cavity (10).

5. An injection moulding device according to any of the preceding claims, wherein an end face (7) of the insert (4), in an initial position, is slightly projecting beyond a surface of the fixed mould part.

6. A method for moulding disc shaped objects (16) having a through hole (17), comprising the steps of:
injecting a warm, liquid resin from an injection nozzle (6) in a fixed mould part (1), into a moulding device comprising the fixed mould part and one additional, movable mould part (2), one of which having an object cavity (10) for forming of the disc;
pressing the movable mould part against the fixed mould part and compressing the resin between the mould parts;
advancing a punch (3), having the cross sectional shape and dimension of the hole to be formed in the disc, forward from the movable mould part against a movable insert (4) in the fixed mould part, which is aligned with and has essentially the same cross sectional shape and dimension as the punch and which surrounds the injection nozzle;
pressing the punch against the insert with a force and hold against the insert with a predetermined resilient counter force, in order to press the hot resin from the area between the punch and the insert into the object cavity;
increasing the pressing force of the punch until the resilient counter force from the insert is exceeded and the punch together with the insert moves a distance into the fixed mould part to thereby punch out the hole in the disc;
allowing the resin to solidify;
removing the movable mould part from the fixed mould part;
retracting the punch into the initial position in the movable mould part; and
unloading the formed disk from the moulding device, but letting a resin layer (15) formed on the insert remain throughout the entire manufacturing series.
